# FASCICULE DE BREVET EUROPEEN

(11) **EP 3 332 138 B1**
(45) Date de publication et mention de la délivrance du brevet: **19.06.2019**
(21) Numéro de dépôt: 16751505.5
(22) Date de dépôt: 21.07.2016
(51) Int. Cl.: B60K 3/02, B60K 5/02, B64C 27/12, B64D 27/04, B64D 27/26, B64D 35/00, F02B 61/00, F16D 1/076, F16D 1/10, F16H 57/025, F16H 57/00, F16C 3/12

(54) **MOTEUR A COMBUSTION, AERONEF EQUIPE DUDIT MOTEUR ET PROCEDE DE FABRICATION D'UN TEL MOTEUR**
VERBRENNUNGSMOTOR, FLUGZEUG MIT DIESEM MOTOR UND VERFAHREN ZUR HERSTELLUNG SOLCH EINES MOTORS
COMBUSTION ENGINE, AIRCRAFT PROVIDED WITH SAID ENGINE AND METHOD FOR MANUFACTURING SUCH AN ENGINE

(30) Priorité: 06.08.2015 FR 1501682
(43) Date de publication de la demande: 13.06.2018
(73) Titulaire: Airbus Helicopters, 13725 Marignane Cedex (FR)
(72) Inventeur: MERCIER, Christian, 13580 La Fare les Oliviers (FR); HUBERT, Pierre-Julien, 91430 Igny (FR); GAVANIER, Pierre, 78290 Croissy Sur Seine (FR); BALASTRIER, Yann, 92210 Saint-Cloud (FR)
(74) Mandataire: GPI & Associés
(86) Numéro de dépôt international: PCT/EP2016/067400
(87) Numéro de publication internationale: WO 2017/021165

(56) Documents cités:
- CH-A5- 656 933
- DE-C1- 3 320 444
- FR-A1- 2 547 551
- US-A- 2 650 484
- US-A- 2 934 919
- US-A- 3 447 392

## Description

La présente invention concerne le domaine des moteurs à combustion comportant un vilebrequin entraîné en rotation par le mouvement alternatif en translation d'au moins un piston. Un tel moteur à combustion peut notamment être un moteur Diesel ou de manière plus générale un moteur à pistons.

De façon générale, sur de tels moteurs à combustion, le couple moteur permettant d'entrainer des organes annexes ou "couple moteur de sortie" peut être prélevé directement en bout de vilebrequin. Cependant, dans le cas des moteurs à auto-inflammation, le couple moteur de sortie peut varier dans le temps de façon substantielle, par exemple au cours d'un cycle moteur lors de la rotation du vilebrequin générée par le mouvement de translation des pistons. Or, de telles variations du couple moteur sur le vilebrequin peuvent être problématiques pour certaines applications.

Ainsi, il a été également développé des moteurs dans lesquels le couple de sortie est prélevé, non pas directement en bout de vilebrequin, mais sur un arbre de sortie annexe par exemple un arbre de découplage. Un tel arbre de découplage peut alors présenter des propriétés de souplesse en torsion et ainsi peut permettre d'absorber en tout ou partie des variations de couple moteur en sortie de vilebrequin.

Un tel arbre de sortie peut notamment être agencé sur un axe de rotation distinct de celui du vilebrequin et peut par exemple être parallèle à celui du vilebrequin. Le couple moteur peut alors dans ce cas être transmis du vilebrequin à l'arbre de sortie via un train de pignons de transmission.

Dans ce cas, un ensemble de transmission formé par un manchon intermédiaire et un pignon de transmission est entrainé en rotation par des cannelures femelles ménagées en bout de vilebrequin. Or avec les variations de couple et des micromouvements en sortie de vilebrequin, il peut se produire des micro-blocages entre l'ensemble de transmission et le vilebrequin au niveau de la liaison par cannelures.

De tels micro-blocages de la liaison peuvent alors engendrer un mouvement axial dans un sens privilégié et une usure prématurée de la liaison par cannelures en formant par exemple une rampe inclinée sur chaque cannelure ayant pour effet d'exercer un effort axial de poussée sur l'ensemble de transmission. Cet effort axial peut ainsi, à terme, déplacer et faire frotter l'ensemble de transmission sur d'autres parties fixes ou mobiles du moteur telles que le carter moteur, des paliers de guidage ou d'autres pignons adjacents en les endommageant irréversiblement.

Les documents FR 2 547 551, US 2 934 919, US 2 650 484, DE 33 20 444, US 3 447 392 et CH 656 933 décrivent ainsi différents moteurs à combustion ou assemblages mécaniques selon l'art antérieur sans pour autant anticiper l'objet de l'invention.

En effet, la présente invention a alors pour objet de proposer un moteur à combustion permettant de s'affranchir des limitations mentionnées ci-dessus. Ce moteur à combustion possède en effet des moyens pour augmenter de façon substantielle sa fiabilité en évitant la transmission d'efforts axiaux dans l'ensemble de transmission.

L'invention se rapporte donc à un moteur à combustion comportant :
- au moins un vilebrequin tournant autour d'un premier axe de rotation,
- au moins un arbre de sortie d'un couple moteur, un tel arbre de sortie tournant autour d'un second axe de rotation parallèle au premier axe de rotation et distinct du premier axe de rotation,
- au moins un ensemble de transmission tournant autour du premier axe de rotation et étant entrainé en rotation par le vilebrequin pour transmettre le couple moteur à l'arbre de sortie.

Ce moteur à combustion est remarquable en ce qu'il comporte des moyens, dits "moyens de limitation", pour limiter le débattement axial de l'ensemble de transmission par rapport au vilebrequin selon le premier axe de rotation, de tels "moyens de limitation" comportant :
- une pièce de butée introduite dans un logement interne d'une extrémité du vilebrequin, cette pièce de butée étant maintenue axialement entre deux parois en regard du logement interne avec un jeu axial J limité en translation suivant le premier axe de rotation, la pièce de butée prenant appui sur un premier côté dudit ensemble de transmission,
- un bouchon prenant appui sur un second côté de l'ensemble de transmission,
- des moyens de serrage pour exercer une force de serrage axial entre le bouchon, l'ensemble de transmission et la pièce de butée, une telle force de serrage étant orientée parallèlement par rapport au premier axe de rotation.

Autrement dit, les "moyens de limitation" permettent de bloquer le mouvement de translation relatif selon le premier axe de rotation entre l'ensemble de transmission et le vilebrequin. Seul un jeu minimal de débattement axial peut subsister afin notamment de permettre le montage et une légère variation dimensionnelle ou dilatation des pièces en mouvement avec l'augmentation de la température de fonctionnement du moteur.

Un tel blocage en translation est obtenu grâce au positionnement et à l'immobilisation de la butée à l'intérieur d'un logement ménagé dans le vilebrequin. Une telle pièce de butée est en effet prisonnière du logement en étant coincée entre deux parois en regard agencées avantageusement parallèlement l'une par rapport à l'autre perpendiculairement au premier axe de rotation.

Les deux parois en regard du logement permettant de bloquer la pièce de butée peuvent être formées directement par le vilebrequin ou par au moins une pièce annexe tel un anneau élastique maintenu en position axiale dans une gorge ménagée dans le vilebrequin.

Le bouchon et les moyens de serrage permettent quant à eux de venir solidariser l'ensemble de transmission avec la pièce de butée bloquée en translation dans le logement du vilebrequin.

Avantageusement, l'ensemble de transmission peut comporter un manchon intermédiaire et un premier organe de transmission solidarisés l'un avec l'autre, le premier organe de transmission entrainant en rotation un second organe de transmission solidarisé avec l'arbre de sortie.

En d'autres termes, l'ensemble de transmission comporte au moins deux pièces solidarisées entre elles pour transmettre le couple moteur du vilebrequin au second organe de transmission. Une telle solidarisation peut ainsi comporter des moyens pour au moins supprimer un degré de liberté en rotation autour du premier axe de rotation tels un assemblage par cannelures mâles/femelles. Des cannelures mâles sont alors agencées au niveau d'une extrémité du manchon intermédiaire en regard du premier organe de transmission. Ces cannelures mâles coopèrent alors avec des cannelures femelles ménagées dans le premier organe de transmission.

De même, la liaison entre le second organe de transmission et l'arbre de sortie peut comporter des moyens pour au moins supprimer un degré de liberté en rotation autour du second axe de rotation tels un assemblage par cannelures mâles/femelles.

Ces premier et second organes de transmission sont avantageusement formés par des pignons de transmission comportant par exemple des dentures droites engrenant directement l'un avec l'autre mais ils ne se limitent pas à cette réalisation particulière. En effet, par exemple une transmission par chaine et pignons dentés est également envisageable et permet également de transmettre un couple moteur entre l'ensemble de transmission et l'arbre de sortie.

En pratique, l'extrémité du vilebrequin peut comporter des cannelures femelles coopérant avec des cannelures mâles de formes complémentaires ménagées sur l'ensemble de transmission, la pièce de butée comportant également des cannelures mâles de formes complémentaires permettant un coulissement dans les cannelures femelles du vilebrequin et l'introduction selon un sens d'introduction de la pièce de butée dans le logement interne, le logement interne étant ménagé en aval, selon le sens d'introduction, des cannelures femelles de l'extrémité du vilebrequin, le logement interne comportant une forme de révolution délimitée par les deux parois en regard, la forme de révolution permettant à la pièce de butée d'effectuer un mouvement de rotation autour du premier axe de rotation à l'intérieur du logement interne, l'une des parois en regard du logement interne consistant en un ensemble de faces latérales des cannelures femelles du vilebrequin.

De cette manière, la liaison par cannelures entre le vilebrequin et l'ensemble de transmission permet de supprimer un degré de liberté en rotation autour du premier axe de rotation. Cette liaison permet également l'introduction de la pièce de butée dans le logement du vilebrequin puis son blocage axial par la rotation de la pièce de butée à l'intérieur du logement autour du premier axe de rotation. Pour ce faire, il est alors possible de faire pivoter la pièce de butée d'un angle égal au demi-pas des cannelures pour que les cannelures mâles de la pièce de butée se retrouvent en regard des faces latérales des cannelures femelles du vilebrequin.

Les parois en regard du logement et le logement en tant que tel peuvent par exemple être réalisées par l'usinage d'un chambrage intérieur en fond de cannelures femelles dans l'extrémité du vilebrequin.

En outre, la pièce de butée peut comporter au moins un moyen d'indexation émergeant axialement vers le premier côté de l'ensemble de transmission, le moyen d'indexation coopérant avec au moins un autre moyen d'indexation de forme complémentaire ménagé dans le premier côté de l'ensemble de transmission.

Ainsi, une fois l'ensemble de transmission mis en place dans le vilebrequin contre la pièce de butée, les deux moyens d'indexation coopèrent entre eux empêchant alors la libre rotation de la pièce de butée à l'intérieur du logement. De tels moyens d'indexation peuvent notamment se présenter sous la forme d'ergots ou de pions émergeant axialement de la pièce de butée ou du premier côté de l'ensemble de transmission et coopérant avec des alésages de formes complémentaires ménagés dans le premier côté de l'ensemble de transmission ou dans la pièce de butée.

Par ailleurs, les moyens de serrage peuvent comporter une vis avec un filetage agencé au niveau d'une extrémité libre de la vis, cette vis étant agencée axialement le long du premier axe de rotation.

Une telle vis traverse alors à la fois le bouchon et la pièce de butée et permet de plaquer ces deux pièces contre l'ensemble de transmission. Une telle vis peut alors coopérer avec un écrou annexe ou avec un taraudage complémentaire au filetage ménagé directement dans la pièce de butée.

Ainsi, la pièce de butée peut comporter un taraudage coopérant avec le filetage de la vis, et le bouchon peut comporter un alésage au travers duquel la vis passe librement.

Dans ce cas la vis est alors introduite en premier au travers de l'alésage du bouchon, passe à l'intérieur d'une portion creuse de l'ensemble de transmission puis le filetage de la vis vient coopérer avec le taraudage complémentaire ménagé dans la pièce de butée.

Avantageusement, l'ensemble de transmission tournant autour du premier axe de rotation peut être guidé en rotation par rapport à un carter moteur au moyen d'éléments de guidage choisis parmi le groupe comportant les roulements à billes, les roulements à rouleaux, les roulements à aiguilles et les paliers lisses.

De tels éléments de guidage permettent en effet de maintenir radialement l'ensemble de transmission sur le premier axe de rotation et garantissent une libre rotation de l'ensemble de transmission par rapport au carter moteur avec un minimum de frottements.

En pratique, le moteur à combustion peut comporter deux rangées d'au moins un cylindre, chaque cylindre accueillant un piston coulissant le long d'un axe de déplacement, les axes de déplacement d'une rangée étant décalés angulairement d'un angle α par rapport aux axes de déplacement de l'autre rangée, le second axe de rotation étant agencé à l'intérieur d'un secteur angulaire d'angle α entre les deux rangées.

En outre, l'angle α est inférieur ou égal à 180° et le second axe de rotation est positionné à l'intérieur du secteur angulaire d'angle a. Avantageusement, le second axe de rotation peut être centré entre les deux rangés d'au moins un cylindre et donc être agencé sur la bissectrice de l'angle a.

La présente invention a aussi pour objet un aéronef comportant des moyens propulseurs et/ou sustentateurs pour propulser et/ou sustenter un tel aéronef.

Cet aéronef est remarquable en ce que ces moyens propulseurs et/ou sustentateurs sont actionnés par un moteur à combustion tel que précédemment décrit.

Un tel moteur à combustion peut ainsi faire partie d'un groupe de motorisation de l'aéronef permettant d'actionner les moyens propulseurs et/ou sustentateurs.

Enfin, l'invention concerne également un procédé de fabrication du moteur à combustion précité.

En outre, un tel procédé de fabrication est remarquable en ce qu'il comporte une étape de limitation consistant à limiter un débattement axial de l'ensemble de transmission par rapport au vilebrequin selon le premier axe de rotation, une telle étape de limitation comportant les sous étapes successives consistant à :
- introduire une pièce de butée dans un logement interne d'une extrémité du vilebrequin,
- positionner l'ensemble de transmission dans l'extrémité du vilebrequin pour permettre l'entrainement en rotation de l'ensemble de transmission,
- maintenir axialement la pièce de butée entre deux parois en regard du logement interne avec un jeu axial J limité en translation suivant le premier axe de rotation, la pièce de butée prenant appui sur un premier côté de l'ensemble de transmission,
- positionner un bouchon sur un second côté de l'ensemble de transmission,
- exercer une force de serrage axial entre le bouchon, l'ensemble de transmission et la pièce de butée, une telle force de serrage étant orientée parallèlement par rapport au premier axe de rotation.

Autrement dit, l'étape de limitation est obtenue en réalisant une pluralité de sous étapes successivement. Ces sous étapes permettent d'immobiliser axialement, au jeu de débattement près, l'ensemble de transmission par rapport au vilebrequin. Ainsi le vilebrequin entraine en rotation l'ensemble de transmission avec un débattement axial minimum.

Avantageusement, la sous étape consistant à introduire une pièce de butée dans un logement interne d'une extrémité du vilebrequin peut être réalisée en faisant coulisser, selon un sens d'introduction, la pièce de butée selon le premier axe de rotation à l'intérieur de l'extrémité du vilebrequin, une telle extrémité du vilebrequin comportant des cannelures femelles aptes à permettre un coulissement de la pièce de butée comportant des cannelures mâles de formes complémentaires, le logement interne étant ménagé dans l'extrémité du vilebrequin en aval, selon le sens d'introduction des cannelures femelles du vilebrequin.

En d'autres termes, la pièce de butée munie de cannelures mâles peut uniquement coulisser par rapport au vilebrequin lors de son passage dans l'extrémité du vilebrequin comportant les cannelures femelles. Une fois introduite dans le logement interne, la pièce de butée peut alors pivoter librement autour du premier axe de rotation.

En pratique, la sous étape consistant à positionner l'ensemble de transmission dans l'extrémité du vilebrequin peut être réalisée en faisant coulisser l'ensemble de transmission à l'intérieur de l'extrémité du vilebrequin, une telle extrémité du vilebrequin comportant des cannelures femelles en prise avec des cannelures mâles de formes complémentaires ménagées sur l'ensemble de transmission.

Dans ce cas, les cannelures permettent à la fois de transmettre le couple moteur du vilebrequin à l'ensemble de transmission et d'indexer angulairement le vilebrequin par rapport à l'ensemble de transmission. En effet, une fois l'ensemble de transmission positionné dans l'extrémité du vilebrequin, un tel ensemble de transmission ne peut plus pivoter par rapport au vilebrequin autour du premier axe de rotation, au jeu de la liaison par cannelures près.

En outre, la sous étape consistant à maintenir axialement la pièce de butée entre deux parois en regard du logement interne peut être obtenue :
- en faisant pivoter autour du premier axe de rotation la pièce de butée dans le logement interne, l'une des parois en regard du logement interne consistant en un ensemble de faces latérales des cannelures femelles du vilebrequin, et
- en indexant la pièce de butée avec le premier côté de l'ensemble de transmission positionné dans l'extrémité du vilebrequin comportant des cannelures femelles.

Ainsi, une fois la pièce de butée indexée avec le premier côté de l'ensemble de transmission, celle-ci ne peut plus tourner librement à l'intérieur du logement interne. En effet comme déjà évoqué, l'ensemble de transmission coopère avec l'extrémité du vilebrequin par l'intermédiaire de cannelures mâles/femelles complémentaires supprimant le degré de liberté en rotation autour du premier axe de rotation entre ces deux pièces.

De plus, la rotation de la pièce de butée peut par exemple être égale à un demi-pas des cannelures pour permettre de limiter la translation selon le premier axe de rotation de la pièce de butée par rapport au vilebrequin.

Par ailleurs, la sous étape consistant à exercer une force de serrage axial entre le bouchon, ainsi que l'ensemble de transmission et la pièce de butée peut être réalisée en serrant une vis dont une tête vient en appui contre une face externe du bouchon, le bouchon comportant un alésage au travers duquel la vis passe librement, cette vis comportant un filetage agencé au niveau d'une extrémité libre de la vis, un tel filetage coopérant avec un taraudage ménagé dans la pièce de butée.

Autrement dit, on exerce la force de serrage par le vissage d'une vis dans le taraudage de la pièce de butée. Une telle force de serrage est donc proportionnelle au couple de serrage de la vis qui est avantageusement réalisé au moyen d'une clé dynamométrique afin de garantir un serrage avec une force de serrage prédéterminée.

L'invention et ses avantages apparaîtront avec plus de détails dans le cadre de la description qui suit avec des exemples de réalisation donnés à titre illustratif en référence aux figures annexées qui représentent :
- la figure 1, une vue partielle en coupe longitudinale d'un moteur à combustion conforme à l'invention.
- la figure 2, une vue en coupe longitudinale grossie illustrant des "moyens de limitation", conformément à l'invention,
- la figure 3, une vue en perspective d'une pièce de butée, conformément à l'invention,
- la figure 4, un schéma de principe en coupe transversale d'un moteur à combustion conforme à l'invention,
- la figure 5, un aéronef équipé d'un moteur à combustion conforme à l'invention, et
- la figure 6, un logigramme illustrant certaines sous étapes du procédé de fabrication d'un moteur à combustion conforme à l'invention,

Les éléments présents dans plusieurs figures distinctes sont affectés d'une seule et même référence.

Comme déjà évoqué l'invention concerne donc un moteur à combustion permettant de réduire et/ou d'absorber au moins partiellement les à-coups en sortie de vilebrequin via un arbre de découplage par exemple, ou plus généralement via un arbre permettant la sortie de puissance moteur autrement que par le vilebrequin, cet arbre pouvant être par exemple parallèle au vilebrequin.

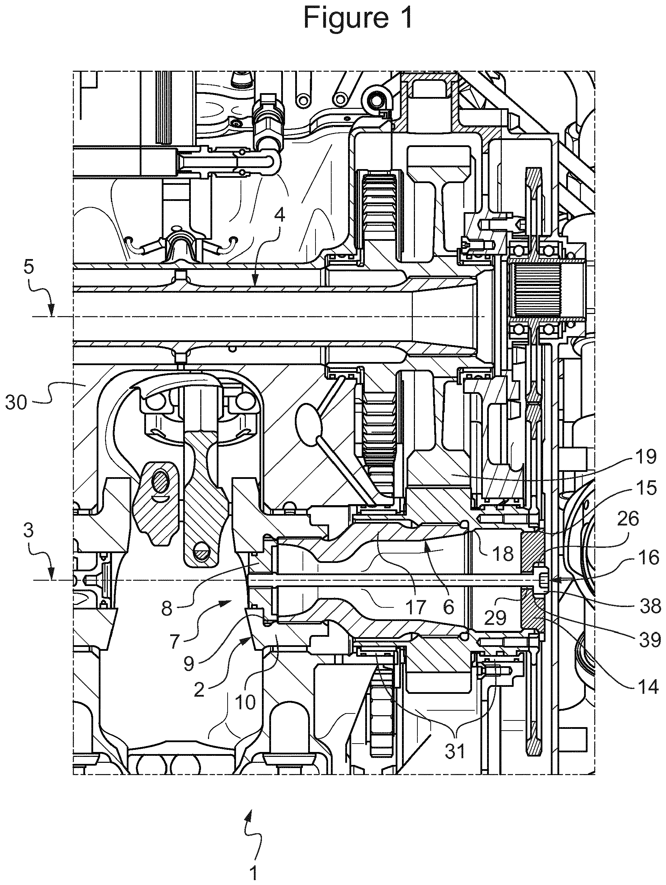

Ainsi tel que représenté à la figure 1, le moteur à combustion 1 comporte un vilebrequin 2 tournant autour d'un premier axe de rotation 3. En outre, un ensemble de transmission 6 est agencé au niveau d'une extrémité 10 du vilebrequin 2 pour transmettre le couple moteur issu du vilebrequin 2 à un arbre de sortie 4 tournant autour d'un second axe de rotation 5.

Tel que représenté, l'ensemble de transmission 6 peut comporter un manchon intermédiaire 17 et un premier organe de transmission 18 solidarisés en rotation l'un avec l'autre au moyen de cannelures mâles/femelles. Le premier organe de transmission 18 peut alors entrainer en rotation un second organe de transmission 19 solidarisé en rotation avec l'arbre de sortie 4 également au moyen de cannelures mâles/femelles.

Un tel ensemble de transmission 6 est alors guidé en rotation par rapport à un carter moteur 30 au moyen d'éléments de guidage 31 tels des roulements à aiguilles notamment.

Par ailleurs, un tel moteur à combustion 1 comporte des "moyens de limitation" 7 permettant de limiter le débattement axial de l'ensemble de transmission 6 le long du premier axe de rotation 3 relativement au vilebrequin 2. De tels "moyens de limitation" 7 comportent en outre une pièce de butée 8 positionnée à l'intérieur d'un logement interne 9 de l'extrémité du vilebrequin.

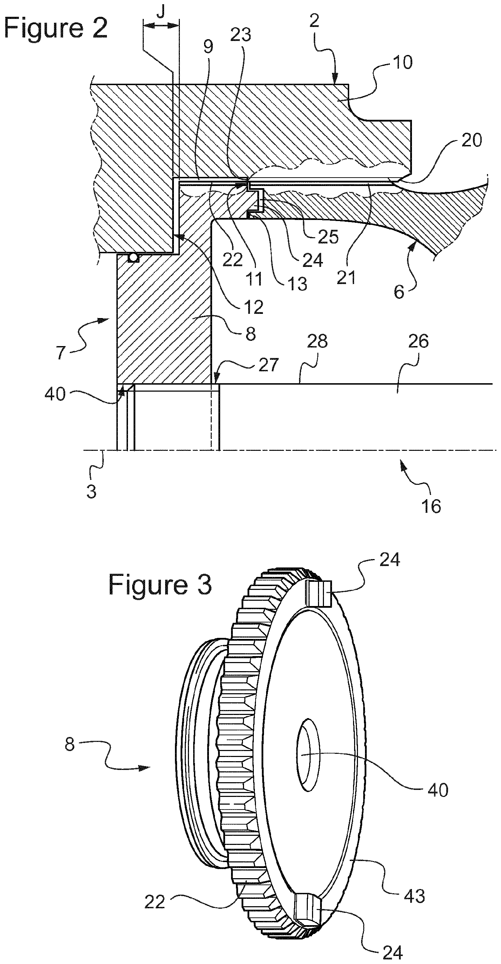

Telle que représentée à la figure 2, une telle pièce de butée 8 est alors maintenue en position axiale sur le premier axe de rotation 3 par deux parois en regard 11, 12 du logement interne 9. Seul un jeu axial J limité en translation permet à la pièce de butée 8 de tourner sur elle-même à l'intérieur du logement interne 9.

Pour ce faire, la pièce de butée 8 comporte des cannelures mâles 22 coopérant de façon complémentaire avec des cannelures femelles 20 ménagées dans l'extrémité 10 du vilebrequin 2. La pièce de butée 8 peut alors être introduite dans le logement interne 9 en la faisant coulisser le long des cannelures femelles 20. Une fois à l'intérieur du logement interne 9, on fait pivoter la pièce de butée 8 autour du premier axe de rotation 3 d'au moins un demi-pas pour que les cannelures mâles 22 de celle-ci soit décalées angulairement par rapport aux cannelures femelles 20 de l'extrémité 10. Dans ce cas, la paroi 11 du logement interne 9 est alors formée par un ensemble de faces latérales 23 des cannelures femelles 20 de l'extrémité 10.

De même, l'ensemble de transmission 6 comporte des cannelures mâles 21 coopérant de façon complémentaire avec les cannelures femelles 20 ménagées dans l'extrémité 10 du vilebrequin 2. Une fois introduit dans l'extrémité 10, l'ensemble de transmission 6 vient prendre appui sur la pièce de butée 8 au niveau d'un premier côté 13 de l'ensemble de transmission 6.

Par ailleurs, la pièce de butée 8 comporte au moins un moyen d'indexation 24 coopérant de façon complémentaire avec au moins un autre moyen d'indexation 25 ménagé dans l'ensemble de transmission 6. Un tel agencement permet alors de supprimer le degré de liberté en rotation de la pièce de butée 8 par rapport à l'ensemble de transmission 6 et donc par rapport au vilebrequin 2, au jeu de la liaison par cannelures mâles 21/femelles 20 près.

En outre, les "moyens de limitation" 7 comportent également un bouchon 14 prenant appui sur un second côté 15 de l'ensemble de transmission 6 et des moyens de serrages 16 permettant de supprimer un degré de liberté en translation entre la pièce de butée 8, l'ensemble de transmission 6 et le bouchon 14.

De tels moyens de serrage 16 peuvent alors comporter une vis 26 passant au travers du bouchon 14 au niveau d'un alésage 29. Une telle vis 26 comporte une tête 38 venant en appui sur une face externe 39 du bouchon 14 et un filetage 27 au niveau d'une extrémité libre 28. Un tel filetage 27 coopère en liaison hélicoïdale avec un taraudage 40 ménagé dans la pièce de butée 8. Une fois la vis 26 mise en place, on applique alors un couple de serrage adapté sur la tête 38 pour éviter tout desserrage accidentel.

Tels que représentés à la figure 3, les moyens d'indexation 24 de la pièce de butée 8 peuvent consister en des ergots prismatiques émergeant d'une face sensiblement plane 43. De tels ergots peuvent ainsi être au nombre de deux et agencés de façon diamétralement opposés l'un par rapport à l'autre.

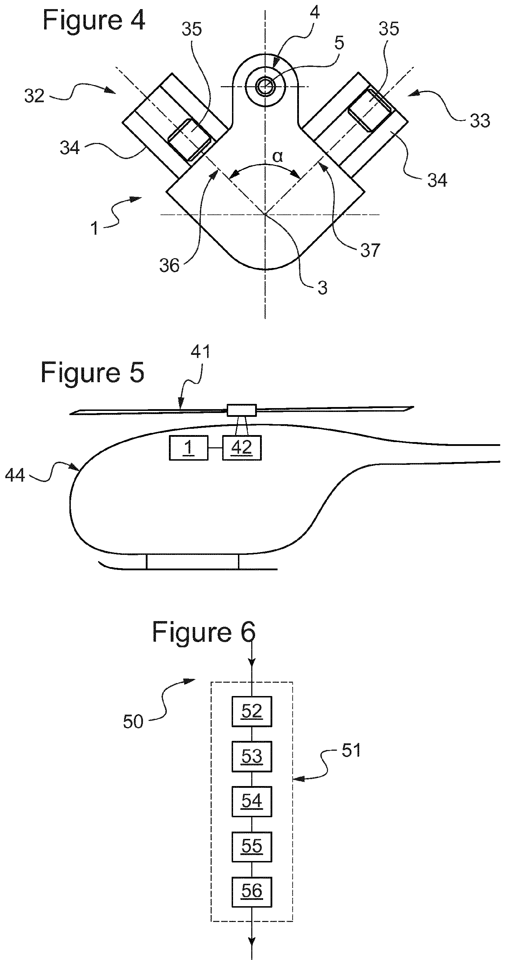

Tel que représenté à la figure 4, le moteur à combustion 1 peut comporter deux rangées 32, 33 de cylindres 34. Par ailleurs, chaque rangée 32, 33 d'au moins un cylindre est définie par un axe de déplacement 36, 37 d'au moins un piston 35.

Les deux axes de déplacement 36, 37 sont alors dans ce cas angulairement décalés l'un par rapport à l'autre d'un angle α autour du premier axe de rotation 3 et confèrent par exemple au moteur à combustion une architecture en V. Bien entendu selon d'autres réalisations de l'invention non représentées, les axes de déplacement des pistons peuvent également être décalés angulairement l'un par rapport à l'autre d'un angle α sans être concourants avec le premier axe de rotation 3.

Dans ce cas, l'arbre de sortie 4 est agencé à l'intérieur du secteur angulaire α et avantageusement le second axe de rotation 5 peut être positionné sur la bissectrice de l'angle α parallèlement au premier axe de rotation 3.

Tel que représenté à la figure 5, l'invention se rapporte également à un aéronef 44 équipé d'un moteur à combustion 1 tel que précédemment décrit. Le moteur à combustion 1 entraîne alors en rotation des moyens propulseurs et/ou sustentateurs 41 permettant à l'aéronef 44 de voler.

Tel que représenté, un tel aéronef 44 peut par exemple se présenter sous la forme d'un giravion. Dans ce cas, le moteur à combustion 1 peut être accouplé à une boite de transmission principale de puissance 42 pour entraîner les moyens propulseurs et/ou sustentateurs 41 formés par un rotor principal.

Enfin telle que représentée à la figure 6, l'invention se rapporte également à un procédé de fabrication 50 d'un moteur à combustion 1. En outre, un tel procédé de fabrication 50 comporte une étape de limitation 51 permettant de limiter le débattement axial de l'ensemble de transmission 6 par rapport au vilebrequin 2.

Par ailleurs cette étape de limitation 51 peut se décomposer en une pluralité de sous étapes 52, 53, 54, 55, 56 opérées successivement les unes par rapport aux autres.

Ainsi, l'étape de limitation 51 comporte une sous étape 52 consistant à introduire la pièce de butée 8 dans le logement interne 9 du vilebrequin 2. Une telle introduction est avantageusement réalisée en faisant coopérer des cannelures mâles 22 de la pièce de butée 8 avec des cannelures femelles 20 de l'extrémité 10. La pièce de butée 8 peut alors coulisser axialement le long du premier axe de rotation 3 par rapport au vilebrequin 2 avant de pénétrer dans le logement interne 9 du vilebrequin 2.

De plus, l'étape de limitation 51 comporte une sous étape 53 consistant à positionner l'ensemble de transmission 6 dans l'extrémité 10 du vilebrequin 2 pour réaliser l'entraînement en rotation de l'ensemble de transmission 6. De même que pour la pièce de butée 8, l'ensemble de transmission 6 peut comporter des cannelures mâles 21 coopérant avec les cannelures femelles 20 de l'extrémité 10.

L'étape de limitation 51 comporte ensuite une sous étape 54 consistant à maintenir axialement la pièce de butée 8 dans le logement interne 9 entre deux parois en regard 11, 12 avec un jeu axial J limité. Pour ce faire, on fait pivoter la pièce de butée 8 autour du premier axe de rotation 3 et on indexe la pièce de butée 8 avec le premier côté 13 de l'ensemble de transmission 6.

L'étape de limitation 51 comporte alors une sous étape 55 consistant à positionner le bouchon 14 sur le second côté 15 de l'ensemble de transmission 6.

Enfin, l'étape de limitation 51 comporte une sous étape 56 consistant à exercer une force de serrage axial sur le bouchon 14, l'ensemble de transmission 6 et la pièce de butée 8. Une telle sous étape 56 est alors réalisée en exerçant une couple de serrage sur la vis 26 passant au travers du bouchon 14 et de l'ensemble de transmission 6, et comportant un filetage 27 coopérant avec un taraudage 40 ménagé dans la pièce de butée 8.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Moteur à combustion (1) comportant :
• au moins un vilebrequin (2) tournant autour d'un premier axe de rotation (3),
• au moins un arbre de sortie (4) d'un couple moteur, ledit arbre de sortie (4) tournant autour d'un second axe de rotation (5) distinct dudit premier axe de rotation (3),
• au moins un ensemble de transmission (6) tournant autour dudit premier axe de rotation (3) et étant entrainé en rotation par ledit vilebrequin (2) pour transmettre ledit couple moteur audit arbre de sortie (4),
**caractérisé en ce que** ledit moteur à combustion (1) comporte des moyens (7), dits "moyens de limitation", pour limiter le débattement axial dudit ensemble de transmission (6) par rapport audit vilebrequin (2) selon ledit premier axe de rotation (3), lesdits "moyens de limitation" (7) comportant :
• une pièce de butée (8) introduite dans un logement interne (9) d'une extrémité (10) dudit vilebrequin (2), ladite pièce de butée (8) étant maintenue axialement entre deux parois en regard (11, 12) dudit logement interne (9) avec un jeu axial J limité en translation suivant ledit premier axe de rotation (3), ladite pièce de butée (8) prenant appui sur un premier côté (13) dudit ensemble de transmission (6),
• un bouchon (14) prenant appui sur un second côté (15) dudit ensemble de transmission (6),
• des moyens de serrage (16) pour exercer une force de serrage axial entre ledit bouchon (14), ledit ensemble de transmission (6) et ladite pièce de butée (8), ladite force de serrage étant orientée parallèlement par rapport audit premier axe de rotation (3).

2. Moteur à combustion selon la revendication 1,
**caractérisé en ce que** ledit ensemble de transmission (6) comporte un manchon intermédiaire (17) et un premier organe de transmission (18) solidarisés l'un avec l'autre, ledit premier organe de transmission (18) entrainant en rotation un second organe de transmission (19) solidarisé avec ledit arbre de sortie (4).

3. Moteur à combustion selon l'une des revendications 1 ou 2,
**caractérisé en ce que** ladite extrémité (10) dudit vilebrequin (2) comporte des cannelures femelles (20) coopérant avec des cannelures mâles (21) de formes complémentaires ménagées sur ledit ensemble de transmission (6), ladite pièce de butée (8) comportant également des cannelures mâles (22) de formes complémentaires permettant un coulissement dans les cannelures femelles (20) dudit vilebrequin (2) et l'introduction selon un sens d'introduction de ladite pièce de butée (8) dans ledit logement interne (9), ledit logement interne (9) étant ménagé en aval, selon ledit sens d'introduction, desdites cannelures femelles (20) de ladite extrémité (10) dudit vilebrequin (2), ledit logement interne (9) comportant une forme de révolution délimitée par lesdites deux parois en regard (11, 12), ladite forme de révolution permettant à ladite pièce de butée (8) d'effectuer un mouvement de rotation autour dudit premier axe de rotation (3) à l'intérieur dudit logement interne (9), l'une desdites parois en regard (11) dudit logement interne (9) consistant en un ensemble de faces latérales (23) desdites cannelures femelles (20) dudit vilebrequin (2).

4. Moteur à combustion selon l'une quelconque des revendications 1 à 3,
**caractérisé en ce que** ladite pièce de butée (8) comporte au moins un moyen d'indexation (24) émergeant axialement vers ledit premier côté (13) dudit ensemble de transmission (6), ledit au moins un moyen d'indexation (24) coopérant avec au moins un autre moyen d'indexation (25) de forme complémentaire ménagé dans ledit premier côté (13) dudit ensemble de transmission (6).

5. Moteur à combustion selon l'une quelconque des revendications 1 à 4,
**caractérisé en ce que** les moyens de serrage (16) comportent une vis (26) avec un filetage (27) agencé au niveau d'une extrémité libre (28) de ladite vis (26), ladite vis (26) étant agencée axialement le long dudit premier axe de rotation (3).

6. Moteur à combustion selon la revendication 5,
**caractérisé en ce que** ladite pièce de butée (8) comporte un taraudage (40) coopérant avec ledit filetage (27) de ladite vis (26), et ledit bouchon (14) comporte un alésage (29) au travers duquel ladite vis (26) passe librement.

7. Moteur à combustion selon l'une quelconque des revendications 1 à 6,
**caractérisé en ce que** ledit ensemble de transmission (6) tournant autour dudit premier axe de rotation (3) est guidé en rotation par rapport à un carter moteur (30) au moyen d'éléments de guidage (31) choisis parmi le groupe comportant les roulements à billes, les roulements à rouleaux, les roulements à aiguilles et les paliers lisses.

8. Moteur à combustion selon l'une quelconque des revendications 1 à 7,
**caractérisé en ce que** ledit moteur à combustion (1) comporte deux rangées (32, 33) d'au moins un cylindre (34), chaque cylindre (34) accueillant un piston (35) coulissant le long d'un axe de déplacement (36, 37), lesdits axes de déplacement (36) d'une rangée (32) étant décalés angulairement d'un angle α par rapport aux axes de déplacement (37) de l'autre rangée (33), ledit second axe de rotation (5) étant agencé à l'intérieur d'un secteur angulaire d'angle α entre lesdites deux rangées (32, 33).

9. Aéronef (44) comportant des moyens propulseurs et/ou sustentateurs (41) pour propulser et/ou sustenter ledit aéronef (44),
**caractérisé en ce que** lesdits moyens propulseurs et/ou sustentateurs (41) sont actionnés par un moteur à combustion (1) selon l'une quelconque des revendications 1 à 8.

10. Procédé de fabrication (50) d'un moteur à combustion (1) selon la revendication 1,
**caractérisé en ce que** ledit procédé de fabrication (50) comporte une étape de limitation (51) consistant à limiter un débattement axial dudit ensemble de transmission (6) par rapport audit vilebrequin (2) selon ledit premier axe de rotation (3), ladite étape de limitation (51) comportant les sous étapes (52, 53, 54, 55, 56) successives consistant à :
• introduire une pièce de butée (8) dans un logement interne (9) d'une extrémité (10) dudit vilebrequin (2),
• positionner ledit ensemble de transmission (6) dans ladite extrémité (10) dudit vilebrequin (2) pour permettre l'entrainement en rotation dudit ensemble de transmission (6),
• maintenir axialement ladite pièce de butée (8) entre deux parois en regard (11, 12) dudit logement interne (9) avec un jeu axial J limité en translation suivant ledit premier axe de rotation (3), ladite pièce de butée (8) prenant appui sur un premier côté (13) dudit ensemble de transmission (6),
• positionner un bouchon (14) sur un second côté (15) dudit ensemble de transmission (6),
• exercer une force de serrage axial entre ledit bouchon (14), ledit ensemble de transmission (6) et ladite pièce de butée (8), ladite force de serrage étant orientée parallèlement par rapport audit premier axe de rotation (3).

11. Procédé de fabrication d'un moteur à combustion selon la revendication 10,
**caractérisé en ce que** ladite sous étape (52) consistant à introduire une pièce de butée (8) dans un logement interne (9) d'une extrémité (10) dudit vilebrequin (2) est réalisée en faisant coulisser, selon un sens d'introduction, ladite pièce de butée (8) selon ledit premier axe de rotation (3) à l'intérieure de ladite extrémité (10) dudit vilebrequin (2), ladite extrémité (10) dudit vilebrequin (2) comportant des cannelures femelles (20) aptes à permettre un coulissement de ladite pièce de butée (8) comportant des cannelures mâles (22) de formes complémentaires, ledit logement interne (9) étant ménagé dans ladite extrémité (10) dudit vilebrequin (2) en aval, selon ledit sens d'introduction, desdites cannelures femelles (20) dudit vilebrequin (2).

12. Procédé de fabrication d'un moteur à combustion selon l'une des revendications 10 ou 11
**caractérisé en ce que** ladite sous étape (53) consistant à positionner ledit ensemble de transmission (6) dans ladite extrémité (10) dudit vilebrequin (2) est réalisée en faisant coulisser ledit ensemble de transmission (6) à l'intérieur de ladite extrémité (10) dudit vilebrequin (2), ladite extrémité (10) dudit vilebrequin (2) comportant des cannelures femelles (20) en prise avec des cannelures mâles (21) de formes complémentaires ménagées sur ledit ensemble de transmission (6).

13. Procédé de fabrication d'un moteur à combustion selon les revendications 11 et 12,
**caractérisé en ce que** ladite sous étape (54) consistant à maintenir axialement ladite pièce de butée (8) entre deux parois en regard (11, 12) dudit logement interne (9) est obtenue :
• en faisant pivoter autour dudit premier axe de rotation (3) ladite pièce de butée (8) dans ledit logement interne (9), l'une desdites parois en regard (11) dudit logement interne (9) consistant en un ensemble de faces latérales (23) desdites cannelures femelles (20) dudit vilebrequin (2), et
• en indexant ladite pièce de butée (8) avec ledit premier côté (13) dudit ensemble de transmission (6) positionné dans ladite extrémité (10) dudit vilebrequin (2) comportant des cannelures femelles (20).

14. Procédé de fabrication d'un moteur à combustion selon l'une quelconque des revendications 10 à 13,
**caractérisé en ce que** ladite sous étape (56) consistant à exercer une force de serrage axial entre ledit bouchon (14), ainsi que ledit ensemble de transmission (6) et ladite pièce de butée (8) est réalisée en serrant une vis (26) dont une tête (38) vient en appui contre une face externe (39) dudit bouchon (14), ledit bouchon (14) comportant un alésage (29) au travers duquel ladite vis (26) passe librement, ladite vis (26) comportant un filetage (27) agencé au niveau d'une extrémité libre (28) de ladite vis (26), ledit filetage (27) coopérant avec un taraudage (40) ménagé dans ladite pièce de butée (8).

## Patentansprüche

1. Verbrennungsmotor (1) mit
• mindestens einer Kurbelwelle (2), die sich um eine erste Drehachse (3) dreht,
• mindestens einer Abtriebswelle (4) für ein Motordrehmoment, wobei sich die Abtriebswelle (4) um eine zweite Drehachse (5) dreht, die sich von der ersten Drehachse (3) unterscheidet,
• mindestens einer Getriebeanordnung (6), die sich von der Kurbelwelle (2) angetrieben um die erste Drehachse (3) dreht, um das Motordrehmoment auf die Ausgangswelle (4) zu übertragen,
**dadurch gekennzeichnet, dass** der Verbrennungsmotor (1) als "Begrenzungsmittel" bezeichnete Mittel (7) umfasst, um die axiale Bewegungsfreiheit der Getriebeanordnung (6) in Bezug auf die Kurbelwelle (2) entlang der ersten Drehachse (3) zu begrenzen, wobei die "Begrenzungsmittel" (7) umfassen:
• ein Anschlagstück (8), das in eine innere Aufnahme (9) eines Endes (10) der Kurbelwelle (2) eingesetzt ist, wobei das Anschlagstück (8) axial zwischen zwei gegenüberliegenden Wänden (11, 12) der inneren Aufnahme (9) mit einem axialen Spiel J, das entlang der ersten Drehachse (3) in Translationsrichtung begrenzt ist, gehalten ist, wobei das Anschlagstück (8) auf einer ersten Seite (13) der Getriebeanordnung (6) abgestützt ist,
• einen Stopfen (14) auf einer zweiten Seite (15) der Getriebeanordnung (6),
• Klemmmittel (16) zum Ausüben einer axialen Klemmkraft zwischen dem Stopfen (14), der Getriebeanordnung (6) und dem Anschlagstück (8), wobei die Klemmkraft parallel zur ersten Drehachse (3) ausgerichtet ist.

2. Verbrennungsmotor nach Anspruch 1,
**dadurch gekennzeichnet, dass** die Getriebeanordnung (6) eine Zwischenhülse (17) und ein erstes Übertragungselement (18) umfasst, die aneinander befestigt sind, wobei das erste Übertragungselement (18) ein zweites Übertragungselement (19) drehantreibt, das an der Ausgangswelle (4) befestigt ist.

3. Verbrennungsmotor nach einem der Ansprüche 1 oder 2,
**dadurch gekennzeichnet, dass** das Ende (10) der Kurbelwelle (2) weibliche Kannelierungen (20) beinhaltet, die mit männlichen Kannelierungen (21) von komplementärer Form zusammenwirken, die auf der Getriebeanordnung (6) vorgesehen sind, wobei auch das Anschlagstück (8) männliche Kannelierungen (22) von komplementärer Form aufweist, die ein Gleiten in den weiblichen Kannelierungen (20) der Kurbelwelle (2) und ein Einführen des Anschlagstücks (8) in einer Einführrichtung in die innere Aufnahme (9) ermöglichen, wobei die innere Aufnahme (9) in Einführrichtung stromabwärts von den weiblichen Kannelierungen (20) des Endes (10) der Kurbelwelle (2) vorgesehen ist, wobei die innere Aufnahme (9) eine durch die beiden gegenüberliegenden Wände (11, 12) begrenzte Rotationsform aufweist, die Rotationsform es dem Anschlagstück (8) ermöglicht, eine Drehbewegung um die erste Drehachse (3) innerhalb der inneren Aufnahme (9) auszuführen, wobei eine der gegenüberliegenden Wände (11) des inneren Aufnahmegehäuses (9) aus einem Satz von Seitenflächen (23) der weiblichen Kannelierungen (20) der Kurbelwelle (2) besteht.

4. Verbrennungsmotor nach einem der Ansprüche 1 bis 3,
**dadurch gekennzeichnet, dass** das Anschlagstück (8) mindestens ein Indexiermittel (24) umfasst, das axial zur ersten Seite (13) der Getriebeanordnung (6) austritt, wobei das mindestens eine Indexiermittel (24) mit mindestens einem anderen Indexiermittel (25) von komplementärer Form zusammenwirkt, das in der ersten Seite (13) der Getriebeanordnung (6) vorgesehen ist.

5. Verbrennungsmotor nach einem der Ansprüche 1 bis 4,
**dadurch gekennzeichnet, dass** die Klemmmittel (16) eine Schraube (26) mit einem Gewinde (27) umfassen, das an einem freien Ende (28) der Schraube (26) angeordnet ist, wobei die Schraube (26) axial entlang der ersten Drehachse (3) angeordnet ist.

6. Verbrennungsmotor nach Anspruch 5,
**dadurch gekennzeichnet, dass** das Anschlagstück (8) ein mit dem Gewinde (27) der Schraube (26) zusammenwirkendes Gewinde (40) aufweist und der Stopfen (14) eine Bohrung (29) aufweist, durch die die Schraube (26) frei hindurchgeht.

7. Verbrennungsmotor nach einem der Ansprüche 1 bis 6,
**dadurch gekennzeichnet, dass** die Getriebeanordnung (6), die sich um die erste Drehachse (3) dreht, in Bezug auf ein Motorgehäuse (30) mittels Führungselementen (31), ausgewählt aus der Gruppe bestehend aus Kugellagern, Rollenlagern, Nadellagern und Gleitlagern, drehbar geführt ist.

8. Verbrennungsmotor nach einem der Ansprüche 1 bis 7,
**dadurch gekennzeichnet, dass** der Verbrennungsmotor (1) zwei Reihen (32, 33) von mindestens einem Zylinder (34) aufweist, wobei jeder Zylinder (34) einen Kolben (35) aufnimmt, der entlang einer Verschiebungsachse (36, 37) gleitet, die Verschiebungsachsen (36) einer Reihe (32) um einen Winkel α in Bezug auf die Verschiebungsachsen (37) der anderen Reihe (33) winkelversetzt sind, wobei die zweite Drehachse (5) in einem Winkelsektor mit Winkel α zwischen den beiden Reihen (32, 33) angeordnet ist.

9. Fluggerät (44) mit Antriebs- und/oder Auftriebseinrichtungen (41) zum Antreiben und/oder Anheben des Fluggeräts (44),
**dadurch gekennzeichnet, dass** die Antriebs- und/oder Auftriebseinrichtungen (41) von einem Verbrennungsmotor (1) nach einem der Ansprüche 1 bis 8 angetrieben sind.

10. Verfahren zur Herstellung (50) eines Verbrennungsmotors (1) nach Anspruch 1,
**dadurch gekennzeichnet, dass** das Herstellungsverfahren (50) einen Begrenzungsschritt (51) beinhaltet, der darin besteht, eine axiale Bewegungsfreiheit der Getriebeanordnung (6) in Bezug auf die Kurbelwelle (2) entlang der ersten Drehachse (3) zu begrenzen, wobei der Begrenzungsschritt (51) die aufeinanderfolgenden Teilschritte (52, 53, 54, 55, 56) beinhaltet, die darin bestehen:
• ein Anschlagstück (8) in eine innere Aufnahme (9) eines Endes (10) der Kurbelwelle (2) einzusetzen,
• die Getriebeanordnung (6) an dem Ende (10) der Kurbelwelle (2) zu positionieren, um den Drehantrieb der Getriebeanordnung (6) zu ermöglichen,
• das Anschlagstück (8) zwischen zwei gegenüberliegenden Wänden (11, 12) der inneren Aufnahme (9) mit einem axialen Spiel J axial zu halten, das entlang der ersten Drehachse (3) translatorisch begrenzt ist, wobei das Anschlagstück (8) auf einer ersten Seite (13) der Getriebeanordnung (6) gelagert ist,
• einen Stopfen (14) an einer zweiten Seite (15) der Getriebeanordnung (6) zu positionieren,
• eine axiale Klemmkraft zwischen dem Stopfen (14), der Getriebeanordnung (6) und dem Anschlagteil (8) auszuüben, wobei die Klemmkraft parallel zu der ersten Drehachse (3) ausgerichtet ist.

11. Verfahren zur Herstellung eines Verbrennungsmotors nach Anspruch 10,
**dadurch gekennzeichnet, dass** der Teilschritt (52), der darin besteht, ein Anschlagstück (8) in eine innere Aufnahme (9) eines Endes (10) der Kurbelwelle (2) einzusetzen, durch Verschieben des Anschlagstücks (8) in einer Einführungsrichtung entlang der ersten Drehachse (3) in das Ende (10) der Kurbelwelle (2) ausgeführt wird, wobei das Ende (10) der Kurbelwelle (2) weibliche Kannelierungen (20) aufweist, die angepasst sind, um ein Gleiten des Anschlagstücks (8) zu ermöglichen, das männliche Kannelierungen (22) von komplementärer Form aufweist, wobei die innere Aufnahme (9) in dem Ende (10) der Kurbelwelle (2) in Einführungsrichtung stromabwärts von den weiblichen Kannelierungen (20) der Kurbelwelle (2) vorgesehen ist.

12. Verfahren zur Herstellung eines Verbrennungsmotors nach einem der Ansprüche 10 oder 11
**dadurch gekennzeichnet, dass** der Teilschritt (53), der darin besteht, die Getriebeanordnung (6) in dem Ende (10) der Kurbelwelle (2) zu positionieren, durch Verschieben der Getriebeanordnung (6) in das Ende (10) der Kurbelwelle (2) ausgeführt wird, wobei das Ende (10) der Kurbelwelle (2) weibliche Kannelierungen (20) in Eingriff mit männlichen Kannelierungen (21) komplementärer Form aufweist, die auf der Getriebeanordnung (6) vorgesehen sind.

13. Verfahren zur Herstellung eines Verbrennungsmotors nach den Ansprüchen 11 und 12,
**dadurch gekennzeichnet, dass** der Teilschritt (54), der darin besteht, das Anschlagstück (8) axial zwischen zwei gegenüberliegenden Wänden (11, 12) des inneren Gehäuses (9) zu halten, ausgeführt wird durch:
• Schwenken des Anschlagstücks (8) um die erste Drehachse (3) in der inneren Aufnahme (9), wobei eine der gegenüberliegenden Wände (11) der inneren Aufnahme (9) aus einem Satz von Seitenflächen (23) der weiblichen Kannelierungen (20) der Kurbelwelle (2) besteht, und
• Indexieren des Anschlagstücks (8) mit der ersten Seite (13) der Getriebeanordnung (6), die in dem Ende (10) der Kurbelwelle (2) mit weiblichen Kannelierungen (20) positioniert ist.

14. Verfahren zur Herstellung eines Verbrennungsmotors nach einem der Ansprüche 10 bis 13,
**dadurch gekennzeichnet, dass** der Teilschritt (56), der darin besteht, eine axiale Klemmkraft zwischen dem Stopfen (14) sowie der Getriebeanordnung (6) und dem Anschlagstück (8) auszuüben, durch Anziehen einer Schraube (26) durchgeführt wird, deren Kopf (38) an einer Außenfläche (39) des Stopfens (14) anliegt, wobei der Stopfen (14) eine Bohrung (29) aufweist, durch die die Schraube (26) frei hindurchtritt, wobei die Schraube (26) ein Gewinde (27) aufweist, das an einem freien Ende (28) der Schraube (26) angeordnet ist, wobei das Gewinde (27) mit einem in dem Anschlagstück (8) vorgesehenen Gewinde (40) zusammenwirkt.

## Claims

1. Combustion engine (1) comprising:
• at least one crankshaft (2) rotating about a first axis of rotation (3),
• at least one output shaft (4) for an engine torque, said output shaft (4) rotating about a second axis of rotation (5) distinct from said first axis of rotation (3),
• at least one transmission assembly (6) rotating about said first axis of rotation (3) and being driven in rotation by said crankshaft (2) to transmit said engine torque to said output shaft (4),
**characterised in that** said combustion engine (1) comprises means (7), referred to as "limiting means", for limiting the axial travel of said transmission assembly (6) with respect to said crankshaft (2) along said first axis of rotation (3), said "limiting means" (7) comprising:
• a stop piece (8) inserted into an internal housing (9) in one end (10) of said crankshaft (2), said stop piece (8) being held axially between two facing walls (11, 12) of said internal housing (9) with a limited axial clearance J in translation along said first axis of rotation (3), said stop piece (8) bearing against a first side (13) of said transmission assembly (6),
• a plug (14) bearing against a second side (15) of said transmission assembly (6),
• clamping means (16) for exerting an axial clamping force between said plug (14), said transmission assembly (6) and said stop piece (8), said clamping force being oriented parallel to said first axis of rotation (3).

2. Combustion engine according to claim 1,
**characterised in that** said transmission assembly (6) comprises an intermediate sleeve (17) and a first transmission member (18) that are secured to each other, said first transmission member (18) driving rotation of a second transmission member (19) secured to said output shaft (4).

3. Combustion engine according to any one of claims 1 or 2,
**characterised in that** said end (10) of said crankshaft (2) comprises female flutes (20) cooperating with male flutes (21) of complementary shapes provided on said transmission assembly (6), said stop part (8) also comprising male flutes (22) of complementary shapes allowing them to slide into the female flutes (20) of said crankshaft (2) and allowing said stop part (8) to be inserted into said internal housing (9) in a direction of insertion, said internal housing (9) being provided downstream, in said direction of insertion, of said female flutes (20) of said end (10) of said crankshaft (2), said internal housing (9) having a shape of a body of revolution delimited by said two facing walls (11, 12), said shape of a body of revolution allowing said stop piece (8) to perform a rotational movement about said first axis of rotation (3) within said internal housing (9), one of said facing walls (11) of said internal housing (9) consisting of a set of lateral faces (23) of said female flutes (20) of said crankshaft (2).

4. Combustion engine according to any one of claims 1 to 3,
**characterised in that** said stop part (8) comprises at least one indexing means (24) emerging axially towards said first side (13) of said transmission assembly (6), said at least one indexing means (24) cooperating with at least one other indexing means (25) of complementary shape provided in said first side (13) of said transmission assembly (6).

5. Combustion engine according to any one of claims 1 to 4,
**characterised in that** the clamping means (16) comprise a screw (26) with a thread (27) arranged at a free end (28) of said screw (26), said screw (26) being axially arranged along said first axis of rotation (3).

6. Combustion engine according to claim 5,
**characterised in that** said stop piece (8) comprises a female thread (40) cooperating with said thread (27) of said screw (26) and said plug (14) comprises a bore (29) through which said screw (26) passes freely.

7. Combustion engine according to any one of claims 1 to 6,
**characterised in that** said transmission assembly (6) rotating about said first axis of rotation (3) is guided in rotation with respect to a crankcase (30) by means of guide elements (31) selected from the group comprising ball bearings, roller bearings, needle bearings and plain bearings.

8. Combustion engine according to any one of claims 1 to 7,
**characterised in that** said combustion engine (1) comprises two rows (32, 33) with at least one cylinder (34), each cylinder (34) receiving a piston (35) sliding along a displacement axis (36, 37), said displacement axes (36) of one row (32) being angularly offset by an angle α with respect to the displacement axes (37) of the other row (33), said second axis of rotation (5) being arranged within an angular sector of angle α between said two rows (32, 33).

9. Aircraft (44) comprising propellant and/or lift means (41) for propelling and/or lifting said aircraft (44),
**characterised in that** said propellant and/or lift means (41) are operated by a combustion engine (1) according to any one of claims 1 to 8.

10. Method of manufacturing (50) a combustion engine (1) according to claim 1,
**characterised in that** said manufacturing method (50) comprises a limiting step (51) consisting in limiting an axial travel of said transmission assembly (6) with respect to said crankshaft (2) along said first axis of rotation (3), said limiting step (51) comprising the successive sub-steps (52, 53, 54, 55, 56) consisting in:
• inserting a stop piece (8) into an internal housing (9) in one end (10) of said crankshaft (2),
• positioning said transmission assembly (6) in said end (10) of said crankshaft (2) to allow said transmission assembly (6) to be driven in rotation,
• axially holding said stop piece (8) between two facing walls (11, 12) of said internal housing (9) with a limited axial clearance J in translation along said first axis of rotation (3), said stop piece (8) bearing against a first side (13) of said transmission assembly (6),
• positioning a plug (14) on a second side (15) of said transmission assembly (6),
• exerting an axial clamping force between said plug (14), said transmission assembly (6) and said stop part (8), said clamping force being oriented parallel to said first axis of rotation (3).

11. Method of manufacturing a combustion engine according to claim 10, **characterised in that** said sub-step (52) consisting in inserting a stop piece (8) into an internal housing (9) in one end (10) of said crankshaft (2) is carried out by causing said stop part (8) to slide in a direction of insertion along said first axis of rotation (3) into the inside of said end (10) of said crankshaft (2), said end (10) of said crankshaft (2) comprising female flutes (20) adapted to allow sliding of said abutment part (8) comprising male flutes (22) of complementary shapes, said internal housing (9) being arranged in said end (10) of said crankshaft (2) downstream, in said direction of insertion, of said female flutes (20) of said crankshaft (2).

12. Method of manufacturing an internal combustion engine according to any one of claims 10 or 11,
**characterised in that** said sub-step (53) consisting in positioning said transmission assembly (6) in said end (10) of said crankshaft (2) is carried out by causing said transmission assembly (6) to slide inside said end (10) of said crankshaft (2), said end (10) of said crankshaft (2) comprising female flutes (20) in engagement with male flutes (21) of complementary shapes arranged on said transmission assembly (6).

13. Method of manufacturing a combustion engine according to claims 11 and 12,
**characterised in that** said sub-step (54) consisting in axially holding said stop piece (8) between two facing walls (11, 12) of said internal housing (9) is obtained:
• by causing said stop piece (8) to rotate about said first axis of rotation (3) in said internal housing (9), one of said facing walls (11) of said internal housing (9) consisting of a set of lateral faces (23) of said female flutes (20) of said crankshaft (2), and
• by indexing said stop piece (8) with said first side (13) of said transmission assembly (6) positioned in said end (10) of said crankshaft (2) that comprises female flutes (20).

14. Method of manufacturing a combustion engine according to any one of claims 10 to 13,
**characterised in that** said sub-step (56) consisting in exerting an axial clamping force between said plug (14) as well as said transmission assembly (6) and said stop piece (8) is carried out by tightening a screw (26), a head (38) of which bears against an external face (39) of said plug (14), said plug (14) comprising a bore (29) through which said screw (26) passes freely, said screw (26) having a thread (27) arranged at a free end (28) of said screw (26), said thread (27) cooperating with a female thread (40) provided in said stop piece (8).
